# EUROPÄISCHE PATENTSCHRIFT

(11) **EP 2 677 458 B1**
(45) Veröffentlichungstag und Bekanntmachung des Hinweises auf die Patenterteilung: **15.10.2014**
(21) Anmeldenummer: 12173210.1
(22) Anmeldetag: 22.06.2012
(51) Int. Cl.: G06K 7/10, G06K 7/14

(54) **Optoelektronische Vorrichtung und Verfahren zur Helligkeitskorrektur**
Optoelectronic device and method for adjusting brightness
Dispositif optoélectronique et procédé de correction de la luminosité

(43) Veröffentlichungstag der Anmeldung: 25.12.2013
(73) Patentinhaber: SICK AG, 79183 Waldkirch (DE)
(72) Erfinder: Burghardt, Sascha, 79183 Waldkirch (DE); Rinklin, Dietram, 79110 Freiburg (DE); Schüler, Pascal, 79331 Teningen (DE); Walter, Stefan, 79215 Elzach (DE)
(74) Vertreter: Hehl, Ulrich

(56) Entgegenhaltungen:
- US-A1- 2003 116 628
- US-A1- 2009 001 165

## Beschreibung

Die Erfindung betrifft eine optoelektronische Vorrichtung mit einem Bildsensor zur Erzeugung von Bildern eines Erfassungsbereichs und ein Verfahren zur Helligkeitskorrektur derartiger Bilder nach dem Oberbegriff von Anspruch 1 beziehungsweise 10.

In den Bildern, die eine Kamera aufnimmt, haben Strukturen häufig eine verzerrte Helligkeitsverteilung. Maßstab ist dabei eine imaginäre oder tatsächliche Referenzaufnahme, in welcher die Struktur mit ausreichender, homogener Ausleuchtung von einem Bildsensor erfasst wird. Tatsächlich führen aber zahlreiche Effekte zu Abweichungen von der gewünschten Homogenität, darunter ein sogenannter Randabfall mit schwächerer Ausleuchtung und Erfassung der Randbereiche eines Bildes gegenüber der Bildmitte, und die Entstehung von Helligkeitsverläufen besonders bei starker Neigung der Kamera gegenüber der zu erfassenden Struktur.

Deshalb ist oftmals eine Helligkeitskorrektur oder Helligkeitsnormierung des Eingangsbildes wünschenswert. Abstrakt geht es dabei darum, eine möglichst wirklichkeitsgetreue Aufnahme zu erhalten. Konkret wird die Codelesung als beispielhaftes Anwendungsfeld für Kameras betrachtet. Hier lösen mit der Weiterentwicklung der digitalen Kameratechnologie kamerabasierte Systeme zunehmend die noch weit verbreiteten Barcodescanner ab, welche einen Barcode mit einem Lesestrahl quer zum Code abtasten. Codeleser werden zum Beispiel an Supermarktkassen, zur automatischen Paketidentifikation, zur Sortierung von Postsendungen oder bei der Gepäckabfertigung in Flughäfen und in anderen Logistikanwendungen eingesetzt.

Ein kamerabasierter Codeleser nimmt, statt Codebereiche abzuscannen, mit Hilfe eines pixelaufgelösten Bildsensors Bilder der Objekte mit den darauf befindlichen Codes auf. Anschließend extrahiert eine Bildauswertungssoftware aus diesen Bildern die Codeinformation. Kamerabasierte Codeleser kommen problemlos auch mit anderen Codearten als eindimensionalen Strichcodes zurecht, die wie ein Matrixcode auch zweidimensional aufgebaut sind und mehr Informationen zur Verfügung stellen.

Wenn das Kamerabild, welches der Decodierung zugrunde gelegt wird, Helligkeitsverzerrungen aufweist, beeinträchtigt dies die Leserate.

Ein spezieller Anwendungsfall für Codeleser ist die Codeverifikation. Dabei geht es primär nicht wie üblich darum, den Inhalt eines Codes auszulesen und weiterzuverarbeiten. Stattdessen wird die Qualität des Codes beurteilt, beispielsweise direkt nachdem der Code gedruckt oder in eine Oberfläche eingeprägt wurde. Dieser Vorgang kann eine Decodierung beinhalten, deren Ergebnis aber schon vorab bekannt sein kann und dann lediglich bestätigt werden soll. Für die Codequalität sind Standards etwa in der ISO 16022 oder der ISO 15415 vereinbart. Effekte wie die verzerrte Helligkeitsverteilung, die durch das Kamerasetup und die Bildaufnahmesituation verursacht sind und nicht durch den Code selbst, dürfen in die Codeverifikation nicht mit eingehen.

Codeleser gehen gemäß Stand der Technik auf verschiedene Weisen mit einer verzerrten Helligkeitsverteilung um. Oft werden die Codes einfach ohne Helligkeitskorrektur gelesen. Das führt aber unter Umständen zu Binarisierungsproblemen in der Vorverarbeitung der Decodierung. Die Codelesung erhält eine positionsabhängige Komponente. So sind beispielsweise Codes, die am Rand des Gesichtsfeldes liegen, schwerer zu lesen also solche in der Bildmitte, weil die Aufnahmeoptik und der Bildsensor typischerweise einen Randenergieabfall zeigen. Bei einer starken Kameraneigung verursacht die interne Beleuchtung des Codelesers einen Grauwerteverlauf oder eine Grauwerterampe im Bild, welcher das korrekte Auslesen der Codeinformation erschwert. Im Ergebnis erfolgt das Codelesen nicht in jedem Bildbereich mit gleicher Verlässlichkeit.

Die Codeverifikation nach den genannten ISO-Normen erfolgt herkömmlich in einem Offline-Modus mit entsprechend aufwändigen Geräten. Dabei ist eine Normbeleuchtung vorgesehen und nur eine orthogonale Sicht auf den Code zulässig, um perspektivische Verzerrungen zu unterdrücken und die zu verifizierenden Codes möglichst homogen auszuleuchten. Diese Randbedingungen sind unter realen Bedingungen im Online-Einsatz praktisch nicht zu erfüllen. Das Codelesen aus orthogonaler Perspektive ist häufig wegen direkter Reflexionen der integrierten Beleuchtung problematisch.

Gerade bei Lesen eines Codes unter einer Folie oder einem direkt in ein teilspiegelndes Material eingeprägten Codes hilft ein schräger Lesewinkel, den Einfluss derartiger Reflexionen zu verringern.

Folglich widersprechen sich die Anforderungen an eine Codelesung in der Anwendung und die Codeverifikation. Eine standardisierte Offline-Verifikation misst aus dem originalen, unveränderten Bild stets auch das Kamerasetup und die optischen Eigenschaften des Kamerasystems mit, so dass das Verifikationsergebnis nicht ganz wirklichkeitstreu sein kann. Wünschenswert wäre dagegen eine Verifikationsmöglichkeit eines beliebig installierten Kamerasystems, direkt online vor Ort bei der Anwendung, welche hilft, die wirkliche physikalische Druck- oder Prägequalität des Codes zu beurteilen.

Sofern ein Codelesesystem eine Helligkeitskorrektur durchführt, erfolgt dies herkömmlich anhand eines mathematischen Modells, oder es wird eine Kalibrierung anhand eines speziellen Kalibrierziels mit bekannten Helligkeitseigenschaften durchgeführt, etwa eines weißen Papierblatts. Ersteres beruht darauf, das richtige Modell zu wählen und es richtig zu parametrieren. Da eine Vielzahl von Größen einfließt, wie das verwendete Objektiv, die Beleuchtungsintensität der eigenen Beleuchtung, deren Wellenlänge und Sendeoptik sowie der Montagewinkel des Kamerasystems, die zum Teil bei der Herstellung gar nicht bekannt sind, bleiben zu viele Parameter des Modells unbekannt oder unbestimmt, oder das Modell wird zu kompliziert und nicht mehr handhabbar. Eine Kalibrierung über ein spezielles Kalibrierziel dagegen erfordert zusätzliche Komponenten und Schritte bei der Einrichtung des Codelesesystems.

Aus der US 6 758 399 B1 ist eine Verzerrungskorrektur bei der optischen Codelesung bekannt. Dabei werden Spalten und Zeilen des aufgenommenen Codes gesucht, und das Bild wird so transformiert, dass die Spalten und Zeilen senkrecht beziehungsweise waagerecht liegen. Eine Helligkeitskorrektur erfolgt dabei aber nicht.

In der EP 1 379 075 A1 wird das Bild korrigiert, um den mehrfach angesprochenen Randabfall zu kompensieren. Dabei werden Pixel entsprechend ihrem Abstand zu zentralen Referenzpixeln aufgehellt. Einflüsse der Perspektive, also von Abweichungen der optischen Achse der Kamera gegenüber aufgenommenen Objektstrukturen, werden dabei jedoch nicht berücksichtigt.

Es ist daher Aufgabe der Erfindung, eine verbesserte Helligkeitskorrektur für die Bilder eines Bildsensors vorzunehmen.

Diese Aufgabe wird durch eine optoelektronische Vorrichtung mit einem Bildsensor zur Erzeugung von Bildern eines Erfassungsbereichs und ein Verfahren zur Helligkeitskorrektur derartiger Bilder nach Anspruch 1 beziehungsweise 10 gelöst. Dabei geht die Erfindung von dem Grundgedanken aus, dass für die einzelnen Pixel des Bildes Korrekturfaktoren der Helligkeit aus der perspektivischen Verzerrung rekonstruiert werden können, die aus einer nicht orthogonalen Sicht des Bildsensors auf die Objektstrukturen resultiert. Dementsprechend werden Korrekturfaktoren aus einer perspektivischen Transformation berechnet, welche die Neigung der optischen Achse des Bildsensors kompensiert. Das derart korrigierte Bild wird damit helligkeitsnormiert beziehungsweise erscheint homogen ausgeleuchtet und entspricht somit einem Bild, das in einer imaginären Referenzsituation bei normierter, homogener Ausleuchtung aus der senkrechten Draufsicht aufgenommen ist. Die Korrekturfaktoren können während der Helligkeitskorrektur berechnet werden. Bevorzugt werden die Korrekturfaktoren aber, da sie ja von der Vorrichtung und deren Montage, nicht aber der konkreten Szenerie und den dementsprechend aufgenommenen Bildern abhängen, nur einmalig vorab berechnet und abgespeichert.

Die Erfindung hat den Vorteil, dass für die Helligkeitskorrektur weder ein speziell dafür geeignetes, beispielsweise uniformes Kalibrierziel noch Vorwissen über die Vorrichtung und deren Montage benötigt wird. Die Helligkeitskorrektur ist völlig unabhängig vom Bildinhalt und damit robust und einfacher durchzuführen. Es werden beliebige Grauwertrampen korrigiert, die aus der perspektivischen Lage zwischen Bildebene beziehungsweise Bildsensor und Objektebene resultieren. Die Bedingung für eine Codeverifikation, dass der Code aus einer senkrechten Draufsicht aufgenommen wird, muss nicht mehr physikalisch mit den entsprechenden Nachteilen etwa durch Reflexe sichergestellt werden, sondern wird im Nachhinein rechnerisch erfüllt. Damit wird eine Codeverifikation auch unter starker Kameraneigung ermöglicht, und allgemeiner ausgedrückt kann die Position und Orientierung der Codeleser unabhängig von perspektivischen Effekten optimal für die Anwendung gewählt werden.

Vorzugsweise ist eine Kalibriereinheit vorgesehen, welche dafür ausgebildet ist, die perspektivische Transformation als diejenige zu bestimmen, mit der eine bekannte absolute Geometrie eines Kalibriercodes in dessen erfasste Geometrie in dem Bild überführt wird. Aufgrund von perspektivischen Verzerrungen wird der Kalibriercode im Allgemeinen nicht so aufgenommen, dass in dem aufgenommenen Bild seine tatsächliche Geometrie erkennbar ist. Beispielsweise wird ein rechteckiger Kalibriercode zu einem Trapez verzerrt. Die absolute Geometrie, nämlich die rechteckige Gestalt gegebenenfalls einschließlich der Seitenverhältnisse oder sogar der absoluten Abmessungen, ist vorab bekannt, sei es durch allgemeine Annahmen oder Parametrierung. Alternativ kann diese Geometrie in dem Kalibriercode selbst codiert sein, so dass sie der Vorrichtung durch eine Codelesung bekannt wird. Somit ist möglich, die gesuchte perspektivische Transformation als diejenige Transformation zu bestimmen, welche die erfasste Geometrie des Kalibriercodes, also beispielsweise ein Trapez, in seine tatsächliche oder absolute Geometrie überführt, nämlich in dem Beispiel ein Rechteck.

Der Kalibriercode braucht dafür keinerlei spezielle Eigenschaften für die Helligkeitskorrektur aufzuweisen, also beispielsweise nicht uniform rein weiß zu sein. Deshalb genügt ein einfacher, im Feld herstellbarer Kalibriercode, der auch zugleich für eine andere Kalibrierung verwendet wird, beispielsweise eine Längeneichung oder eine Verzeichnungskorrektur. Da sich im Prinzip jede Struktur mit bekannter Geometrie für diese Kalibrierung eignet, erkennt die Vorrichtung bevorzugt auch selbst, wenn die Kalibrierung nicht mehr stimmt. Das ist nämlich dann der Fall, wenn eine erfasste Geometrie, etwa eines Codebereichs, nach Anwendung der perspektivischen Transformation nicht mehr der erwarteten absoluten Geometrie entspricht. Die Ursache dafür könnte beispielsweise darin liegen, dass sich die Neigung oder Position der Vorrichtung verschoben hat, und diese ist deshalb in der Lage, eine erneute Kalibrierung anzufordern oder direkt selbst auszuführen.

Die Helligkeitskorrektureinheit oder eine andere Auswertungseinheit der Vorrichtung ist bevorzugt dafür ausgebildet, die perspektivische Transformation auf das Bild oder einen Teilbereich davon anzuwenden, um ein perspektivisch entzerrtes Bild zu erzeugen. Dabei wird nicht nur die Helligkeit korrigiert, sondern auch die Verzerrung als solche, was die Leserate erhöht und einen Störfaktor für eine Codeverifikation eliminiert.

Die Helligkeitskorrektureinheit ist bevorzugt dafür ausgebildet ist, einen Korrekturfaktor aus dem Verhältnis des Flächeninhalts einer Teilfläche der Bildebene zu dem Flächeninhalt der gemäß der perspektivischen Transformation entstehenden Teilfläche zu berechnen. Dabei wird also das Verhältnis von ursprünglichen Flächenelementen der Bildebene zu entsprechenden Flächenelementen nach Anwendung der perspektivischen Transformation betrachtet. Der Korrekturfaktor kann unmittelbar als dieses Flächenverhältnis beziehungsweise dessen Kehrwert gewählt werden. Alternativ wird der Korrekturfaktor noch weiter modifiziert, beispielsweise indem besonders kleine Flächenverhältnisse überproportional gewichtet werden, um besonders stark durch die Perspektive verdunkelte Bildbereiche in besonderem Maße aufzuhellen.

Die Helligkeitskorrektureinheit ist bevorzugt dafür ausgebildet, die Teilflächen durch regelmäßige Aufteilung der Bildebene festzulegen, insbesondere in Bildquadrate. Die Bildebene wird also mit einem Raster oder Gitter überzogen. Dadurch entstehen regelmäßige Teilflächen in der Bildebene, insbesondere gleich große Quadrate. Die Anwendung der perspektivischen Transformation überführt diese Quadrate in Trapeze. Jeder Pixel innerhalb eines Bildquadrats wird nun über den Korrekturfaktor in seiner Helligkeit in einem Maße aufgehellt oder verdunkelt, der dem Flächenverhältnis des Quadrates zu dem zugehörigen Trapez entspricht. Damit wird der Energieverlust aufgrund der Schrägstellung der Objektebene, verursacht durch die Perspektive des Bildsensors beziehungsweise dessen Neigung, im Nachhinein durch Bildbearbeitung kompensiert.

Die Helligkeitskorrektureinheit weist bevorzugt ein FPGA auf, welches die Pixel eines erfassten Bildes mit zuvor abgelegten Korrekturfaktoren multipliziert. Die Bestimmung der Korrekturfaktoren auf Basis der perspektivischen Transformation erfolgt hierbei einmalig vor dem eigentlichen Betrieb. Die Korrekturfaktoren werden danach gespeichert, beispielsweise in einer Nachschlagtabelle (lookup table). Der Aufwand für die eigentliche Helligkeitskorrektur reduziert sich dann auf eine punktweise Multiplikation der Pixel mit den zugehörigen Korrekturfaktoren. Solche einfachen, aber in sehr großer Zahl möglichst in Echtzeit zu wiederholenden Rechenaufgaben erfüllt ein FPGA besonders kostengünstig. Alternativ kann die Helligkeitskorrektur per Software auf einem hinreichend leistungsfähigen Mikrocontroller ausgeführt werden.

Die Helligkeitskorrektureinheit ist bevorzugt dafür ausgebildet, eine zusätzliche Helligkeitskorrektur mit Randabfallkorrekturfaktoren durchzuführen, die einen bekannten oder angenommenen Helligkeitsabfall des Bildsensors in dessen Randbereichen kompensieren. Der Randabfall wird so zusätzlich zu den perspektivischen Helligkeitsverzerrungen korrigiert. Auf ähnliche Weise können auch andere bekannte Zusatzeffekte auf die Helligkeitsverteilung in weiteren Schritten korrigiert werden. Vorzugsweise werden lediglich einmalig die Korrekturfaktoren angepasst, um auch den Randabfall oder einen anderen Effekt zu berücksichtigen, so dass dann im Betrieb kein zusätzlicher Aufwand erforderlich ist, um die Helligkeitskorrektur noch weiter zu verbessern.

Die Vorrichtung ist vorzugsweise als kamerabasierter Codeleser ausgebildet, der eine Decodiereinheit aufweist, um Codebereiche in den Bildern zu identifizieren und deren codierte Information auszulesen. Die Leserate eines derartigen Codelesers erhöht sich durch die Helligkeitskorrektur, besonders bei erheblicher Neigung des Codelesers, d.h. großer Abweichung von der orthogonalen Draufsicht. Die Decodiereinheit ist noch bevorzugter für die Decodierung von 1 D-Codes und 2D-Codes ausgebildet, insbesondere von Codes, die sich aus Balken, rechteckigen oder quadratischen Moduleinheiten zusammensetzen. 1 D-Codes sind üblicherweise Barcodes. Einige nicht abschließende Beispiele für gängige 2D-Codes sind DataMatrix, QR-Code, Aztec-Code, PDF417 oder MaxiCode.

Die Helligkeitskorrektureinheit ist bevorzugt dafür ausgebildet, Helligkeitswerte von Pixeln nur in Codebereichen zu modifizieren. Damit wird der Rechenaufwand verringert.

Vorzugsweise ist eine Codeverifikationseinheit vorgesehen, welche dafür ausgebildet ist zu prüfen, ob ein erfasster Code eine vorgegebene Codequalität aufweist. Durch die Helligkeitskorrektur und gegebenenfalls eine perspektivische Entzerrung auf Basis der bekannten perspektivischen Transformation werden auch unter Anwendungsbedingungen wichtige Anforderungen an die standardisierten Rahmenbedingungen einer Codeverifikation erfüllt.

Vorzugsweise ist eine Abstandsmesseinheit vorgesehen, insbesondere nach dem Prinzip der Lichtlaufzeitbestimmung, um den Abstand zu einem gelesenen Code oder einem erfassten Objekt zu bestimmen. Derartige Abstandsmessungen werden häufig für eine Autofokuseinstellung eingesetzt. Damit wird zusätzlich zu den beiden Dimensionen der Bilder auch die dritte Dimension des Leseabstands zugänglich, so dass die perspektivische Transformation und die erforderliche Helligkeitskorrektur noch wesentlich genauer bestimmt und angewandt werden kann.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittdarstellung eines kamerabasierten Codelesers;
- Fig. 2: eine schematische Darstellung der perspektivischen Transformation zwischen Objektebene und Bildebene; und
- Fig. 3a-b: je eine schematische Darstellung der Transformation eines Bildquadrats der Bildebene auf ein kleineres und ein größeres Trapez in der Objektebene.

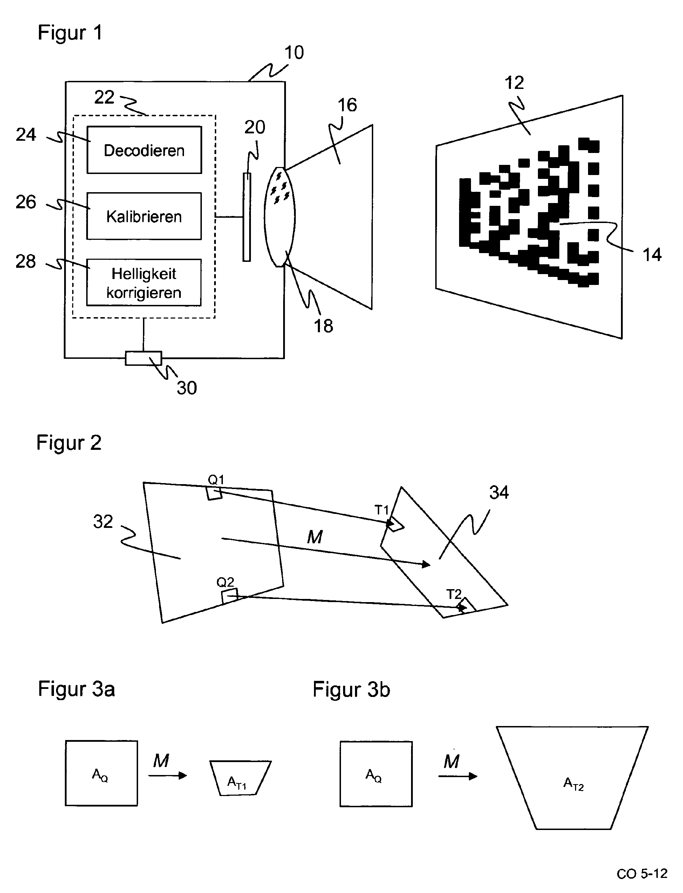

Figur 1 zeigt eine schematische Schnittdarstellung eines kamerabasierten Codelesers 10. Der Codeleser 10 nimmt Bilder aus einem Erfassungsbereich 12 auf, in dem sich beliebige Objekte mit geometrischen Strukturen und insbesondere Codes 14 befinden können. Obwohl die Erfindung am Beispiel des Codelesers 10 beschrieben wird, kann die Helligkeitskorrektur auch auf Bilder anderer Kameras und allgemein von Bildsensoren angewandt werden, die ein pixelaufgelöstes Bild liefern.

Das Licht aus dem Erfassungsbereich 12 wird durch ein Aufnahmeobjektiv 16 empfangen, in dem nur eine dargestellte Linse 18 die Aufnahmeoptik repräsentiert. Ein Bildsensor 20, beispielsweise ein CCD- oder CMOS-Chip mit einer Vielzahl von zu einer Zeile oder einer Matrix angeordneten Pixelelementen, erzeugt Bilddaten des Erfassungsbereichs 12 und gibt diese an eine als Ganzes mit Bezugszeichen 22 gekennzeichnete Auswertungseinheit weiter. Für eine bessere Erfassung des Codes 14 kann der Codeleser 10 mit einer nicht dargestellten aktiven Beleuchtung ausgerüstet sein.

Die Auswertungseinheit 22 ist auf einem oder mehreren digitalen Bausteinen implementiert, beispielsweise Mikroprozessoren, ASICs, FPGAs oder dergleichen, die auch ganz oder teilweise außerhalb des Codelesers 10 vorgesehen sein können. Dargestellt sind nicht die physischen, sondern die funktionalen Module der Auswertungseinheit 22, nämlich eine Decodiereinheit 24, eine Kalibriereinheit 26 und eine Helligkeitskorrektureinheit 28.

Die Decodiereinheit 24 ist in der Lage, Codes 14 zu decodieren, also die in den Codes 14 enthaltene Information auszulesen. Beispielhaft in Figur 1 dargestellt ist ein DataMatrix-Code. Gleichermaßen können aber auch beliebige andere ein- oder zweidimensionale Codetypen verarbeitet werden, solange in der Decodiereinheit 24 entsprechende Leseverfahren implementiert sind. Der Decodierung kann eine Vorverarbeitung vorausgehen, bei welcher innerhalb der Bilder des Bildsensors 20 interessierende Bereiche (ROI, region of interest) mit darin vermuteten oder erkannten Codes identifiziert, die Bilder binarisiert werden oder dergleichen.

Die Kalibriereinheit 26 dient einer Kalibrierung des Codelesers 10, wobei hier vor allem die Erkennung und Korrektur einer Perspektive und insbesondere einer Neigung oder Schrägstellung (Skew) des Bildsensors 20 gegenüber einer Objektebene des Codes 14 relevant ist. Die Bestimmung einer entsprechenden perspektivischen Transformation M wird weiter unten mit Bezugnahme auf Figur 2 genauer erläutert.

Die Helligkeitskorrektureinheit 28 nimmt eine Anpassung der Helligkeitswerte der Pixel des von dem Bildsensor 20 aufgenommenen Bildes vor, die ebenfalls weiter unten hier mit Bezugnahme auf die Figuren 3a-b näher erläutert wird.

An einem Ausgang 30 des Codelesers 10 können Daten ausgegeben werden, und zwar sowohl gelesene Codeinformationen als auch andere Daten, beispielsweise Bilddaten in verschiedenen Verarbeitungsstufen, wie Rohbilddaten, vorverarbeitete Bilddaten oder noch nicht decodierte Codebilddaten aus interessierenden Bereichen.

Erfindungsgemäß kann der Codeleser 10 auch mit Situationen umgehen, bei denen die Ausrichtung nicht orthogonal ist, mit anderen Worten die optische Achse des Bildssensors 20 gegenüber einer Normalen auf eine Objektebene der zu lesenden Codes 14 einen Winkel ungleich Null einschließt. Eine solche geneigte Orientierung des Codelesers 10 ist aufgrund der baulichen Gegebenheiten in der Anwendung, dem Ziel, Codes 14 aus allen Richtungen lesen zu können, und beispielsweise auch deshalb erwünscht, um bei glänzenden Oberflächen nicht zu viel Licht in den Bildsensor 20 zurückzureflektieren. Dafür treten aber perspektivische Verzerrungen auf, welche auch eine inhomogene Helligkeitsverteilung oder Grauwertrampen in dem Bild verursachen und so die Leserate beeinträchtigen beziehungsweise bei einer Codeverifikation die standardisierten Bedingungen verletzen.

Figur 2 illustriert rein beispielhaft die Bildebene 32 des Bildsensors 20 und die Objektebene 34 des Codes 14 bei einer gegebenen Orientierung von Codeleser 10 zu Code 14. Im allgemeinen Fall sind Bildebene 32 und Objektebene 34 nicht zueinander parallel, und der entsprechende Neigungswinkel des Codelesers 10 gegenüber der Objektebene 34 sorgt für eine perspektivische Verzerrung.

Durch eine Kalibrierung kann die Matrix M beziehungsweise deren Inverse bestimmt werden, welche Geometrien der Bildebene 32 in Geometrien der Objektebene 34 überführt. Dazu wird beispielsweise ein beliebiger rechteckiger Code als Kalibriercode präsentiert. Andere Geometrien des Kalibriercodes sind ebenso denkbar, solange die Kalibriereinheit 26 diese Geometrie kennt oder beispielsweise durch Auslesen eines entsprechenden Codeinhalts des Kalibriercodes erfährt.

Durch Lesen des Kalibriercodes in der Decodiereinheit 24 sind die Positionen der vier Eckpunkte des Kalibriercodes 100 mit großer Genauigkeit bekannt. In der Kalibriereinheit 26 wird nun eine Transformation beispielsweise über die Abbildungsmatrix M berechnet, welche die Eckpunkte des verzerrt aufgenommenen Kalibriercodes in die tatsächliche Geometrie eines Rechtecks überführt. Die Abbildungsmatrix M ist eine perspektivische Transformation, die eine Rotation, eine Translation und eine Reskalierung enthalten kann. Sofern auch die absoluten Abmessungen des Kalibriercodes bekannt sind, ist die Transformation maßstabsgetreu. Diese Abmessungen können ebenfalls vorbestimmt, parametriert oder aus dem Codeinhalt des Kalibriercodes gelesen werden, der beispielsweise einen Klartext mit seinen Abmessungen enthält: "Kalibriercode, rechteckig, 3cm mal 4cm". Ohne diese Zusatzinformation der absoluten Abmessungen verbleibt noch ein unbekannter Skalierungsfaktor der Matrix M.

Die einmal während des Kalibriervorgangs bestimmte Transformationsvorschrift M behält ihre Gültigkeit nur so lange, wie der Codeleser 10 gegenüber den zu lesenden Codes 14 in seiner Perspektive verbleibt. Indem ein beliebiger Code 14 während des Betriebs als Kalibriercode aufgefasst wird, kann geprüft werden, ob die Kalibrierung noch stimmt. Dazu wird die Transformation M auf einen Code 14 angewandt und geprüft, ob dessen Eckpunkte noch erwartungsgemäß ein Rechteck bilden.

Aufgrund der Kalibrierung ist somit eine perspektivische Transformation M bekannt, die bestimmt, wie eine beliebige Geometrie auf der Objektebene 34, also einer ebenen Fläche, von welcher der Kalibriercode gelesen wurde, auf die Bildebene 32 abbildet und umgekehrt. Dieses Wissen kann zusätzlich zu der noch zu beschreibenden Helligkeitskorrektur genutzt werden, um Bildbereiche mit Codes 14 perspektivisch zu entzerren und dadurch die Leserate zu erhöhen oder standardisierte Bedingungen für eine Codeverifikation herzustellen. Die perspektivische Transformation kann natürlich alternativ auch eingegeben oder aus festzulegenden Parametern, wie dem Neigungswinkel von Codeleser 10 und der Orientierung der Objektebene 34, aus einem Modell berechnet werden.

Die perspektivische Transformation M wird nun für eine Helligkeitskorrektur genutzt. Die Grundüberlegung dazu ist, die Bildebene 32 gedanklich als einen homogenen Flächenstrahler aufzufassen, der die Objektebene 34 bestrahlt, und die Verteilung der Photonen auf eine Fläche in der Objektebene zu betrachten. Dieser Flächenstrahler wird in gleich große Quadrate mit dem Flächeninhalt A_{Q} unterteilt, wobei Figur 2 beispielhaft zwei solche Quadrate Q1 und Q2 zeigt. Die perspektivische Transformation M gibt für jede Geometrie der Bildebene und damit auch für die Quadrate Q1 und Q2 die entsprechenden Geometrien in der Objektebene 34 an, nämlich Trapeze T1 und T2.

Je nachdem, wo sich das Quadrat Q1, Q2 in der Bildebene 32 befindet, entsteht ein unterschiedlich großes Trapez T1, T2 als Teilbereich der Objektebene 34. Das ist schematisch in den Figuren 3a-b einmal für den Fall eines kleineren entstehenden Trapezes mit Flächeninhalt A_{T1} und einmal für den Fall eines größeren entstehenden Trapezes mit Flächeninhalt A_{T2} gezeigt.

Die Quadrate Q1, Q2 in der Bildebene 32 sind untereinander gleich groß und entsprechen in der imaginären Betrachtung der Bildebene 32 als Flächenstrahler einer gleichen Menge abgestrahlter Energie oder Photonen in Richtung Objektebene 34. Man kann nun nur leicht vereinfachend davon ausgehen, dass diese abgestrahlte Energie auch vollständig in der Objektebene 34 ankommt. Die Anzahl Photonen, die pro Zeiteinheit auf ein Trapez T1, T2 der Objektebene 34 trifft, hängt deshalb nur noch von dem Flächeninhalt der Trapeze T1, T2 ab. Ist die Fläche des Trapezes T1, T2 größer als die Ausgangsfläche des Quadrates Q1, Q2, so verteilt sich die gleiche Anzahl Photonen auf eine größere Fläche, so dass die Objektebenenfläche dunkler wird als das Bildebenenquadrat. Entsprechend entsteht bei kleinerer Fläche des Trapezes T1, T2 eine größere Photonendichte, eine solche Fläche muss demnach heller erscheinen.

Dieser Zusammenhang zwischen Helligkeit und Flächenverhältnissen auf der Bildebene 32 und der Objektebene 34 wird von der Helligkeitskorrektureinheit 28 ausgenutzt. Gemäß der Modellüberlegung genügt es, als Korrekturfaktoren für eine Helligkeitskorrektur das Flächenverhältnis des Quadrates Q1, Q2 zu dem gemäß der perspektivischen Transformation M entstehenden Trapez T1, T2 heranzuziehen. Diese Korrekturfaktoren können beispielsweise direkt pixelweise an die von dem Bildsensor 20 gelieferten Grauwerte des Eingangsbildes multipliziert werden, um das helligkeitskorrigierte Bild zu erhalten.

Formal ausgedrückt ergibt sich für ein Bildebenenquadrat Q an der Position x,y mit Flächeninhalt A_{Q(x,y)} aus der Transformation ein Trapez T mit Flächeninhalt A_{T(x,y)}, und der zu multiplizierende Korrekturwert für die in dem Bildebenenquadrat Q enthaltenen Pixel beziehungsweise deren Grauwerte berechnet sich zu Hₘᵤₗ=A_{Q(x,y)}/A_{T(x,y)}. Je kleiner dabei der Flächeninhalt des Quadrats Q in der Bildebene 32 gewählt wird, je weniger Pixel also in einer Gruppe mit einem gemeinsamen Korrekturfaktor behandelt werden, desto gleichmäßiger wird die Helligkeitskorrektur.

Ist die Matrix M einmal in der Kalibrierung bestimmt, können daraus auch die Korrekturfaktoren berechnet werden. Die Helligkeitskorrektur selbst ist dann nur noch eine punktweise Multiplikation mit Konstanten. Besonders für die letztgenannte Operation eignet sich die Implementierung der Helligkeitskorrektureinheit 28 auf einem FPGA, welches die Multiplikationen in Echtzeit beispielsweise mit Hilfe einer Nachschlagtabelle berechnet und damit eine Kern-CPU der Auswertungseinheit 22 entlastet.

Um zusätzliche Verzerrungen der Helligkeit zu korrigieren, beispielsweise einen Randabfall durch das Aufnahmeobjektiv 16, kann zusätzlich noch ein weiteres Korrekturmodell angewandt werden. Dazu erfolgt in einem zweiten Schritt eine weitere Helligkeitskorrektur, oder die oben aufgeführten Korrekturfaktoren werden modifiziert, um auch einen Randabfall oder weitere Effekte zu berücksichtigen.

## Patentansprüche

1. Optoelektronische Vorrichtung (10) mit einem Bildsensor (20) zur Erzeugung von in Pixeln aufgelösten Bildern eines Erfassungsbereichs (12) und mit einer Helligkeitskorrektureinheit (28), die dafür ausgebildet ist, Helligkeitswerte der Pixel mit einem Korrekturfaktor (Hₘᵤₗ) zu modifizieren, um ein gleichmäßiger ausgeleuchtetes Bild zu erhalten,
**dadurch gekennzeichnet,**
**dass** jeweils ein Korrekturfaktor (Hₘᵤₗ) für einzelne Pixel oder Gruppen von Pixeln aus einer perspektivischen Transformation (M) berechnet ist, welche Geometrien auf einer Objektebene (34) in dem Erfassungsbereich (12) in Geometrien der Bildebene (32) umrechnet.

2. Vorrichtung (10) nach Anspruch 1,
wobei eine Kalibriereinheit (26) vorgesehen ist, welche dafür ausgebildet ist, die perspektivische Transformation (M) als diejenige zu bestimmen, mit der eine bekannte absolute Geometrie eines Kalibriercodes in dessen erfasste Geometrie in dem Bild überführt wird.

3. Vorrichtung (10) nach Anspruch 1 oder 2,
wobei die Helligkeitskorrektureinheit (28) dafür ausgebildet ist, einen Korrekturfaktor (Hₘᵤₗ) aus dem Verhältnis des Flächeninhalts (A_{Q1}, A_{Q2}) einer Teilfläche (Q1, Q2) der Bildebene (32) zu dem Flächeninhalt (A_{T1}, A_{T2}) der gemäß der perspektivischen Transformation (M) entstehenden Teilfläche (T1, T2) zu berechnen.

4. Vorrichtung (10) nach Anspruch 3,
wobei die Helligkeitskorrektureinheit (28) dafür ausgebildet ist, die Teilflächen (Q) durch regelmäßige Aufteilung der Bildebene (32) festzulegen, insbesondere in Bildquadrate.

5. Vorrichtung (10) nach einem der vorhergehenden Ansprüche,
wobei die Helligkeitskorrektureinheit (28) ein FPGA aufweist, welches die Pixel eines erfassten Bildes mit zuvor abgelegten Korrekturfaktoren (Hₘᵤₗ) multipliziert.

6. Vorrichtung (10) nach einem der vorhergehenden Ansprüche,
wobei die Helligkeitskorrektureinheit (28) dafür ausgebildet ist, eine zusätzliche Helligkeitskorrektur mit Randabfallkorrekturfaktoren durchzuführen, die einen bekannten oder angenommenen Helligkeitsabfall des Bildsensors (20) in dessen Randbereichen kompensieren.

7. Vorrichtung (10) nach einem der vorhergehenden Ansprüche,
wobei die Vorrichtung als kamerabasierter Codeleser (10) ausgebildet ist, der eine Decodiereinheit (24) aufweist, um Codebereiche (14) in den Bildern zu identifizieren und deren codierte Information auszulesen.

8. Vorrichtung (10) nach Anspruch 7,
wobei die Helligkeitskorrektureinheit (28) dafür ausgebildet ist, Helligkeitswerte von Pixeln nur in Codebereichen (14) zu modifizieren.

9. Vorrichtung (10) nach Anspruch 7 oder 8,
wobei eine Codeverifikationseinheit (22) vorgesehen ist, welche dafür ausgebildet ist zu prüfen, ob ein erfasster Code (14) eine vorgegebene Codequalität aufweist.

10. Verfahren zur Helligkeitskorrektur von in Pixeln aufgelösten Bildern eines Erfassungsbereichs (12), die von einem Bildsensor (20) aufgenommen werden, bei dem Helligkeitswerte der Pixel mit einem Korrekturfaktor (Hₘᵤₗ) modifiziert werden, um ein gleichmäßiger ausgeleuchtetes Bild zu erhalten,
**dadurch gekennzeichnet,**
**dass** jeweils ein Korrekturfaktor (Hₘᵤₗ) für einzelne Pixel oder Gruppen von Pixeln aus einer perspektivischen Transformation (M) berechnet wird, welche Geometrien auf einer Objektebene (34) in dem Erfassungsbereich (12) in Geometrien der Bildebene (32) umrechnet.

11. Verfahren nach Anspruch 10,
wobei die perspektivische Transformation (M) in einem Kalibriervorgang bestimmt wird, indem ein Bild eines Kalibriercodes in dem Erfassungsbereich (12) aufgenommen wird und diejenige Transformation ermittelt wird, welche eine bekannte absolute Geometrie des Kalibriercodes in dessen erfasste Geometrie in dem aufgenommenen Bild überführt.

12. Verfahren nach Anspruch 10 oder 11,
wobei ein Korrekturfaktor (Hₘᵤₗ) aus dem Verhältnis des Flächeninhalts (A_{Q1}, A_{Q2}) einer Teilfläche (Q1, Q2) der Bildebene (32) zu dem Flächeninhalt (A_{T1}, A_{T2}) der gemäß der perspektivischen Transformation (M) entstehenden Teilfläche (T1, T2) berechnet wird.

13. Verfahren nach Anspruch 12,
wobei die Bildebene (32) in untereinander gleich große Bildquadrate (Q) als Teilflächen unterteilt wird, und wobei der Korrekturfaktor (Hₘᵤₗ) aus dem Verhältnis des Flächeninhalts (A_{Q}) eines Bildquadrats (Q) zu dem Flächeninhalt (A_{T1}, A_{T2}) desjenigen Trapezes (T1, T2) bestimmt wird, in welches das Bildquadrat (Q) durch Anwendung der perspektivischen Transformation (M) in der Objektebene (34) überführt wird.

14. Verfahren nach einem der Ansprüche 10 bis 13,
wobei die Korrekturfaktoren (Hₘᵤₗ) einen zusätzlichen Anteil enthalten, mit dem ein bekannter oder angenommener Helligkeitsabfall des Bildsensors (20) in dessen Randbereichen kompensiert wird.

15. Verfahren nach einem der Ansprüche 10 bis 14,
wobei in den Bildern Codebereiche (14) identifiziert und die darin codierte Information ausgelesen wird.

## Claims

1. An optoelectronic device (10) with an image sensor (20) for generating pixel images of a detection area (12) and with a brightness correction unit (28) configured to modify brightness values of the pixels with a correction factor (Hₘᵤₗ) to obtain a more homogeneously illuminated image,
**characterized in that**
a respective correction factor (Hₘᵤₗ) is calculated for individual pixels or groups of pixels from a perspective transformation (M) which converts geometries of an object plane (34) in the detection area (12) into geometries of the image plane (32).

2. The device (10) according to claim 1,
wherein a calibration unit (26) is provided which is configured to determine the perspective transformation (M) as the transformation which converts a known absolute geometry of a calibration code into its detected geometry in the image.

3. The device (10) according to claim 1 or 2,
wherein the brightness correction unit (28) is configured to calculate a correction factor (Hₘᵤₗ) from the ratio (A_{Q1}, A_{Q2}) of the area of a partial area (Q1, Q2) of the image plane (32) to the area (A_{T1}, A_{T2}) of a transformed partial area (T1, T2) obtained by the perspective transformation (M) of the partial area (Q1, Q2).

4. The device (10) according to claim 3,
wherein the brightness correction unit (28) is configured to define the partial areas (Q) by regularly dividing the image plane (32), in particular into image squares.

5. The device (10) according to any of the preceding claims,
wherein the brightness correction unit (28) comprises an FPGA which multiplies the pixels of a captured image with previously stored correction factors (Hₘᵤₗ).

6. The device (10) according to any of the preceding claims,
wherein the brightness correction unit (28) is configured to perform an additional brightness correction with edge decrease correction factors which compensate a known or assumed brightness decrease of the images sensor (20) in its edge regions.

7. The device (10) according to any of the preceding claims,
wherein the device is configured as a camera-based code reader (10) comprising a decoding unit (24) to identify code areas (14) in the images and read their encoded information.

8. The device (10) according to claim 7,
wherein the brightness correction unit (28) is configured to modify brightness values of pixels only in code areas (14).

9. The device (10) according to claim 7 or 8,
wherein a code verification unit (22) is provided which is configured to determine whether a detected code (14) has a predetermined code quality.

10. A method for brightness correction of pixel images of a detection area (12) which are captured by an image sensor (20), wherein brightness values of the pixels are modified by a correction factor (Hₘᵤₗ) to obtain a more homogeneously illuminated image,
**characterized in that** a respective correction factor (Hₘᵤₗ) is calculated for individual pixels or groups of pixels from a perspective transformation (M) which converts geometries of an object plane (34) in the detection area (12) into geometries of the image plane (32).

11. The method according to claim 10,
wherein the perspective transformation (M) is determined in a calibration process by capturing an image of a calibration code in the detection area (12) and determining that perspective transformation (M) which converts a known absolute geometry of a calibration code into its detected geometry in the image.

12. The method according to claim 10 or 11,
wherein a correction factor (Hₘᵤₗ) is calculated from the ratio (A_{Q1}, A_{Q2}) of the area of a partial area (Q1, Q2) of the image plane (32) to the area (A_{T1}, A_{T2}) of a transformed partial area (T1, T2) obtained by the perspective transformation (M) of the partial area (T1, T2).

13. The method according to claim 12,
wherein the image plane (32) is divided into partial areas being image squares (Q) of a mutually same size, and wherein the correction factor (Hₘᵤₗ) is determined from the ratio of the area (A_{Q}) of an image square (Q) to the area (A_{T1}, A_{T2}) of that trapezoid (T1, T2) into which the image square (Q) is converted in the object plane (34) by applying the perspective transformation (M).

14. The method according to any of claim 10 to 13,
wherein the correction factors (Hₘᵤₗ) include an additional component by which a known or assumed brightness decrease of the image sensor (20) in its edge regions is compensated.

15. The method according to any of claims 10 to 14,
wherein code areas (14) in the images are identified and the information encoded therein is read.

## Revendications

1. Dispositif optoélectronique (10) avec un capteur d'images (20) pour engendrer des images résolues en pixels d'une zone de détection (12) et comprenant une unité de correction de luminosité (28) qui est réalisée pour modifier des valeurs de luminosité des pixels avec un facteur de correction (Hₘᵤₗ) afin d'obtenir une image éclairée de manière régulière,
**caractérisé en ce que**
un facteur de correction respectif (Hmul) est calculé pour des pixels individuels ou pour des groupes de pixels à partir d'une transformation en perspective (M), qui recalcule des géométries sur un plan objet (32) dans la zone de détection (12) pour donner des géométries du plan image (32).

2. Dispositif (10) selon la revendication 1,
dans lequel il est prévu une unité de calibrage (26) qui est réalisée pour déterminer la transformation en perspective (M) comme étant celle avec laquelle une géométrie absolue connue d'un code de calibrage est transformée dans sa géométrie détectée dans l'image.

3. Dispositif (10) selon la revendication 1 ou 2,
dans lequel l'unité de correction de luminosité (28) est réalisée pour calculer un facteur de correction (Hₘᵤₗ) à partir du rapport du contenu surfacique (A_{Q1}, A_{Q2}) d'une surface partielle (Q1, Q2) du plan image (32) sur le contenu surfacique (A_{T1}, A_{T2}) de la surface partielle (T1, T2) qui se forme selon la transformation en perspective (M).

4. Dispositif (10) selon la revendication 3,
dans lequel l'unité de correction de luminosité (28) est réalisée pour définir les surfaces partielles (Q) par subdivision régulière du plan image (32), en particulier en carrés d'image.

5. Dispositif (10) selon l'une des revendications précédentes,
dans lequel l'unité de correction de luminosité (28) comprend un composant FPGA qui multiplie les pixels d'une image détectée avec des facteurs de correction (Hₘᵤₗ) précédemment mémorisés.

6. Dispositif (10) selon l'une des revendications précédentes,
dans lequel l'unité de correction de luminosité (28) est réalisée pour exécuter une correction de luminosité supplémentaire avec des facteurs de correction de chute de bordure, qui compense une chute de luminosité connue ou supposée du capteur d'images (20) dans ses zones de bordure.

7. Dispositif (10) selon l'une des revendications précédentes,
dans lequel le dispositif est réalisé sous forme d'un lecteur de code (10) basé sur une caméra, qui comprend une unité de décodage (24) afin d'identifier des zones de code (14) dans les images et pour lire leurs informations codées.

8. Dispositif (10) selon la revendication 7,
dans lequel l'unité de correction de luminosité (28) est réalisée pour modifier des valeurs de luminosité de pixels uniquement dans les zones de code (14).

9. Dispositif (10) selon la revendication 7 ou 8,
dans lequel il est prévu unité de vérification de code (22) qui est réalisée pour contrôler si un code détecté (14) présente une qualité de code prédéterminée.

10. Procédé pour la correction de luminosité d'images résolues en pixels d'une zone de détection (12), qui sont prises par un capteur d'images (20), dans lequel des valeurs de luminosité des pixels sont modifiées avec un facteur de correction (Hmul) afin d'obtenir une image éclairée de manière régulière,
**caractérisé en ce que**
on calcule respectivement un facteur de correction (Hmul) pour des pixels individuels ou pour des groupes de pixels à partir d'une transformation en perspective (M) qui recalcule des géométries sur un plan objet (34) dans la zone de détection (12) pour donner des géométries du plan image (32).

11. Procédé selon la revendication 10,
dans lequel la transformation en perspective (M) est déterminée dans un processus de calibrage dans lequel on prend une image d'un code de calibrage dans la zone de détection (12) et on détermine la transformation qui transforme une géométrie absolue connue du code de calibrage dans sa géométrie détectée dans l'image prise.

12. Procédé selon la revendication 10 ou 11,
dans lequel on calcule un facteur de correction (Hₘᵤₗ) à partir du rapport du contenu surfacique (A_{Q1}, A_{Q2}) d'une surface partielle (Q1, Q2) du plan image (32) sur le contenu surfacique (A_{T1}, A_{T2}) de la surface partielle (T1, T2) qui apparaît selon la transformation en perspective (M).

13. Procédé selon la revendication 12,
dans lequel le plan image (32) est subdivisé en carrés d'images ayant mutuellement la même taille (Q) à titre de surfaces partielles, et dans lequel le facteur de correction (Hmul) est déterminé à partir du rapport du contenu surfacique (A_{Q}) d'un carré d'image (Q) sur le contenu surfacique (A_{T1}, A_{T2}) de celui des trapèzes (T1, T2) dans lequel le carré d'image (Q) est transformé dans le plan objet (34) par application de la transformation en perspective (M).

14. Procédé selon l'une des revendications 10 à 13,
dans lequel les facteurs de correction (Hₘᵤₗ) contiennent une part supplémentaire avec laquelle on compense une chute de luminosité connue ou supposée du capteur d'images (20) dans ses zones de bordure.

15. Procédé selon l'une des revendications 10 à 14,
dans lequel on identifie des zones de code (14) dans les images et on lit les informations codées dans celles-ci.
